# EUROPEAN PATENT APPLICATION

(11) **EP 1 918 774 A2**
(43) Veröffentlichungstag der Anmeldung: **07.05.2008**
(21) Anmeldenummer: 07019484.0
(22) Anmeldetag: 04.10.2007
(51) Int. Cl.: G03B 21/54, B66F 3/00, F16M 11/38, F16M 13/00, B66F 7/00

(54) **Deckenlift für einen Projektor, mit aus- und einfahrbarem Gelenkstabsystem**

(30) Priorität: 05.10.2006 DE 102006047194
(71) Anmelder: Vision24 GmbH, 64584 Biebesheim a. Rhein (DE)
(72) Erfinder: Roncka, Andreas, 64579 Gernsheim (DE)
(74) Vertreter: Elbel, Michaela

(57) **Zusammenfassung**

Aus- und einklappbare Gelenkstabanordnung weist verschwenkbare Parallelogrammstrukturen auf, die in jeder Verschwenkstellung spiegelsymmetrisch zueinander, bei eingeklappter Gelenkstabanordnung parallel nebeneinander liegend und bei ausgeklappter Gelenkstabanordnung miteinander fluchtend angeordnet sind. Ein aus- und einfahrbares Gelenkstabsystem (90,91) weist eine vorbestimmte Anzahl von sich abwechselnd aneinander anreihenden der aus- und einklappbaren Gelenkstabanordnungen auf. Ferner weist ein Deckenlift (86) für einen Projektor (87), insbesondere einen Video- und/oder Daten-Projektor, eine Projektorbefestigungseinrichtung (88) zum Befestigen eines Projektors und mindestens eines der aus- und einfahrbaren Gelenkstabsysteme auf, das an eine Zimmerdecke anbringbar ist und an dem die Projektorbefestigungseinrichtung befestigt ist.

## Beschreibung

### Gebiet der Erfindung

Die Erfindung betrifft eine aus- und einklappbare Gelenkstabanordnung und ein aus- und einfahrbares Gelenkstabsystem, das die aus- und einklappbare Gelenkstabanordnung aufweist. Ferner betrifft die Erfindung einen Deckenlift für einen Projektor, insbesondere einen Deckenlift für einen Video- und/oder Datenprojektor, der das aus- und einfahrbare Gelenkstabsystem aufweist.

### Hintergrund der Erfindung

Der Einsatz von Medien bei beispielsweise einem Vortrag vor einem Publikum erleichtert die kompakte und wirksame Informationsvermittlung an das Publikum. So kann dem Publikum neben den gesprochenen Ausführungen des Vortragenden auch Bildmaterial präsentiert werden, wodurch der Vortrag für das Publikum anschaulich und einprägsam wird. Als Medien werden Projektoren eingesetzt, mit denen Bildmaterial auf eine Projektionsfläche projiziert werden kann.

Liegt das Bildmaterial als Diapositive vor, so ist zur Präsentation dieses Bildmaterials ein Diaprojektor zu verwenden. Üblich geworden ist der Einsatz von visuellen Ausgabegeräten, wie beispielsweise ein Computer, ein DVD-Player oder ein Videorekorder, zur Präsentation von elektronisch vorliegendem Bildmaterial. Zur Sichtbarmachung des Bildmaterials ist ein Video- oder Datenprojektor, wie beispielsweise ein "Beamer", zu verwenden, der das Bildmaterial in vergrößerter Form an die Projektionsfläche wirft.

Video- und Datenprojektoren sind als mobile Geräte verfügbar, die in einem Vortragsraum zu Präsentationszwecken auf- und abgebaut werden können. Häufig ist in Vortragsräumen ein Video- und/oder Datenprojektor fest installiert.

Hierbei ist der Video- und/oder Datenprojektor beispielsweise an der Decke des Vortragsraums angebracht, wobei der Video- und/oder Datenprojektor, wenn er nicht benötigt wird, an die Decke oder in einen dafür in der Decke vorgesehnen Schacht gefahren werden kann und, wenn der Video- und/oder Datenprojektor zu Präsentationszwecken gebraucht wird, in eine geeignete Position abgesenkt von der Decke gefahren werden kann. In der abgesenkten Position ist der Video-und/oder Datenprojektor derart platzierbar, dass das Publikum an der Projektionsfläche das Bildmaterial scharf projiziert und unverzerrt sehen kann.

Zum Verfahren, Halten und Positionieren des Video- und/oder Datenprojektors ist ein Deckenlift vorgesehen, der an der Decke befestigt ist und an den oder in dem der Video- und/oder Datenprojektor montiert ist. Zum bequemen Betreiben des Deckenlifts ist dieser zum Verfahren mit einem Motorantrieb ausgestattet.

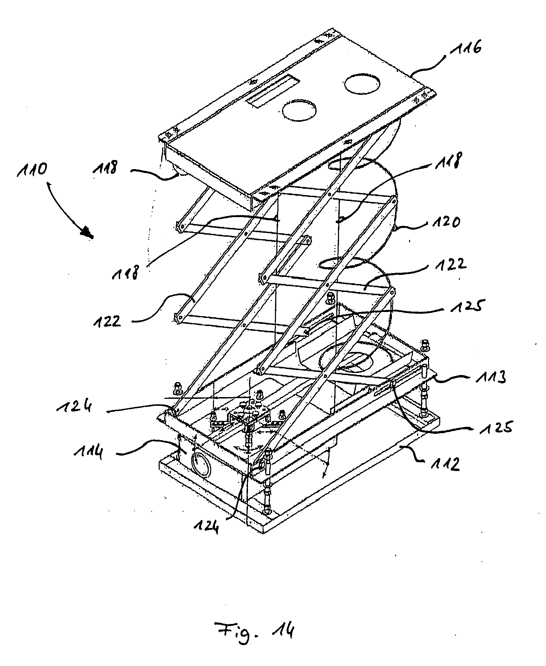

In Figur 14 ist ein herkömmlicher Deckenlift 110 gezeigt. Der Deckenlift 110 weist eine Grundplatte 112 und eine Halteplatte 113 auf, die über der Grundplatte 112 angeordnet ist und mit dieser einen Schacht bildet, in den ein Projektor 114 montiert ist. Ferner weist der Deckenlift 110 eine Deckenplatte 116 auf, mit der der Deckenlift 110 an die Decke des Vortragsraums befestigt werden kann. Zum Absenken und Anheben der Grundplatte 112 weist der Deckenlift 110 einen motorisiert angetriebenen Seilzug 118 auf. Ferner weist der Deckenlift 110 ein Kabel 120 auf, das freiliegend schraubenwendelförmig zwischen der Deckenplatte 116 und der Grundplatte 112 verläuft und zum Datentransfer von bzw. zu dem Projektor 114 und zu dessen Energieversorgung vorgesehen ist.

Ferner ist seitlich des Projektors 114 zwischen der Halteplatte 112 und der Deckenplatte 116 jeweils ein Gestänge 122 vorgesehen. Das Gestänge 122 ist aufgebaut als eine Gelenkkette, die aus mehreren paarweise X-förmig angeordneten Stäben besteht, die in ihrer Mitte gelenkig miteinander und an ihren Stabenden mit anderen Stäben gleicher Anordnung verbunden sind. Eine derartige Anordnung von Stäben und Gelenken ist als "Nürnberger Schere" bekannt. Im Einfahrzustand des Deckenlifts 110 ist das Gestänge 122 zwischen der Deckenplatte 116 und der Halteplatte 113 zusammengefaltet angeordnet und im Ausfahrzustand des Deckenlifts 110 ist das Gestänge 122 zwischen der Deckenplatte 116 und der Halteplatte 113 auseinandergefaltet angeordnet.

Das Gestänge 122 ist an der Halteplatte 113 mittels eines Festlagers 124 und eines Loslagers 125 befestigt und in entsprechender Weise an der Deckenplatte 116 befestigt. Das Loslager 125 ist gebildet von einem Bolzen und einem in der Halteplatte 113 vorgesehenen Langloch, in das der Bolzen gleitbar aufgenommen ist. Der maximale Verfahrweg des Bolzens ist von der Längserstreckung des Langlochs vorgegeben. Durch das Verfahren des Bolzens in dem Langloch in Richtung nach außen wird das Gestänge eingefaltet, wohingegen durch das Verfahren des Bolzens in die entgegengesetzte Richtung das Gestänge ausgefaltet wird.

Befindet sich der Bolzen am äußeren Längsende des Langlochs, ist das Gestänge 122 vollständig eingefaltet. Beim eingefalteten Gestänge 122 liegen die einzelnen Stäbe dicht nebeneinander und verlaufen diagonal von der Halteplatte 113 zu der Deckenplatte 116. Daher ist der Abstand zwischen der Halteplatte 113 und der Deckenplatte 116 im Einfahrzustand des Gestänges 122 groß, so dass die Baugröße des Deckenlifts 110 bei eingefahrenem Gestänge 122 groß ist.

Befindet sich hingegen der Bolzen am inneren Längsende des Langlochs, ist das Gestänge 122 vollständig ausgefaltet. Beim ausgefalteten Gestänge 122 sind die einzelnen Stäbe in einer Zick-Zack-Anordnung angeordnet, wodurch das Gestänge 122 eine Fachwerkstruktur bildet. Dadurch sind die Halteplatte 113 und die Deckenplatte 116 gegeneinander versteift gehalten. Somit hat der Deckenlift 110 bei ausgefahrenem Gestänge 110 eine steife Struktur.

Zur Erzielung dieser steifen Struktur des Deckenlifts 110 ist es notwendig, dass das Gestänge 122 im Ausfahrzustand eine vorbestimmte Breite hat, die durch die Lage des Bolzens an dem innen liegenden Längsende des Langlochs vorgegeben ist. Ein weiteres Ausfahren des Gestänges 122 würde zwar zu einer Vergrößerung des Maximalhubs des Gestänges führen, jedoch würde sich die Versteifungsstabilität des Gestänges 122 verringern. Somit ist im Ausfahrzustand das Gestänge 122 nicht bis zu dem Punkt ausgefahren, bis zu dem es theoretisch möglich wäre, um die erforderliche Stabilität für den Deckenlift 110 bereitzustellen. Daraus resultiert ein maximal möglicher Hub des Gestänges 122, der kleiner ist als der theoretisch maximale Maximalhub.

Somit hat der Deckenlift 110 in seinem Einfahrzustand eine große Bauhöhe und im Ausfahrzustand einen geringen Maximalhub. Dadurch ist für den Deckenlift 110 ein großer Unterbringungsraum an der Zimmerdecke bereitzustellen, in dem der Deckenlift 110 im Einfahrzustand untergebracht werden kann. Dies ist insbesondere von Nachteil, wenn die Zimmerdeckenhöhe gering ist. Ferner hat der Deckenlift 110 aufgrund des geringen Maximalhubs des Gestänges 122 eine geringe Rechweite, die beim Einsatz des Deckenlifts 110 in Zimmern mit hoher Zimmerdeckenhöhe nachteilig ist, da der Projektor bei einer Präsentation nicht in die erforderliche Position gebracht werden kann.

Ferner, da das Kabel 120 zwischen der Halteplatte 113 und der Deckenplatte 116 freiliegend und ungeführt verlegt ist, besteht beim Verfahren des Deckenlifts 110 die Gefahr, dass das Kabel 120 an dem Gestänge 122 reibt oder hängen bleibt und durch Scheuern oder Reißen beschädigt wird. Dadurch ist die Betriebszuverlässigkeit des Deckenlifts 110 beeinträchtigt.

### Zugrundeliegende Aufgabe

Aufgabe der Erfindung ist es, eine aus- und einklappbare Gelenkstabanordnung, die eine geringe Einklappbaulänge und einen große Ausklappbaulänge hat, ein aus- und einfahrbares Gelenkstabsystem, das eingefahren eine geringe Länge in Verfahrichtung und einen großen Maximalhub hat, und einen Deckenlift für einen Projektor zu schaffen, insbesondere für einen Video- und/oder Datenprojektor, der im Einfahrzustand eine geringe Bauhöhe und im Ausfahrzustand eine große Maximalreichweite hat, wobei der Deckenlift in jeder Verfahrposition mechanisch stabil ist.

### Erfindungsgemäße Lösung

Die erfindungsgemäße aus- und einklappbare Gelenkstabanordnung weist auf einen ersten Hauptstab und einen ersten Nebenstab, die jeweils einen Längsendbereich aufweisen, und ein Gelenkelement, an das die Längsendbereiche derart voneinander versetzt mittels eines ersten Hauptstabgelenks bzw. eines ersten Nebenstabgelenks gelenkig befestigt sind, dass von dem ersten Hauptstab, dem ersten Nebenstab und dem Gelenkelement eine erste um das Gelenkelement verschwenkbare Parallelogrammstruktur gebildet ist, einen zweiten Hauptstab mit einem an dem Gelenkelement mittels eines zweiten Hauptstabgelenks gelenkig befestigten Längsendbereich und einen zweiten Nebenstab mit einem Längsendbereich, der von dem Längsendbereich des zweiten Hauptstabs versetzt an das Gelenkelement mittels eines zweiten Nebenstabgelenks gelenkig derart befestigt ist, dass von dem zweiten Hauptstab, dem zweiten Nebenstab und dem Gelenkelement eine zweite um das Gelenkelement verschwenkbare Parallelogrammstruktur gebildet ist, die in der von der ersten Parallelogrammstruktur beschriebenen Ebene liegt, und ein Kopplungsmittel, das mit den Längsendbereichen der Hauptstäbe derart gekoppelt ist, dass die Parallelogrammstrukturen in jeder Verschwenkstellung spiegelsymmetrisch zueinander, bei eingeklappter Gelenkstabanordnung parallel nebeneinander liegend und bei ausgeklappter Gelenkstabanordnung miteinander fluchtend angeordnet sind.

Da die Hauptstäbe und die Nebenstäbe bei eingeklappter Gelenkstabanordnung parallel nebeneinander liegend angeordnet sind, hat die eingeklappte Gelenkstabanordnung eine geringe Ausdehnung senkrecht zu den Längsrichtungen der Hauptstäbe und der Nebenstäbe. Ferner, da bei ausgeklappter Gelenkstabanordnung die Hauptstäbe und die Nebenstäbe miteinander fluchtend angeordnet sind, hat die ausgeklappte Gelenkstabanordnung einen großen Streckungsgrad. Außerdem, da der erste Hauptstab sowie der erste Nebenstab und der zweite Hauptstab sowie der zweite Nebenstab miteinander derart gekoppelt sind, dass in jeder Verschwenkstellung die Haupt und Nebenstäbe spiegelsymmetrisch zueinander angeordnet sind, hat in jeder Verschwenkstellung die Gelenkstabanordnung eine hohe mechanische Steifigkeit.

Das erfindungsgemäße aus- und einfahrbare Gelenkstabsystem weist eine vorbestimmte Anzahl von sich abwechselnd aneinander anreihenden erfindungsgemäßen aus- und einklappbaren Gelenkstabanordnungen und zwei Endgelenkelemente auf, an die jeweils die Längsendbereiche des ersten Hauptstabs, des ersten Nebenstabs bzw. des letzten Hauptstabs und des letzten Nebenstabs derart voneinander versetzt befestigt sind, dass von dem ersten Hauptstab, dem ersten Nebenstab und dem ersten Endgelenkelement eine erste um das Gelenkelement verschwenkbare Parallelogrammstruktur gebildet ist bzw. von dem letzten Hauptstab, dem letzten Nebenstab und dem zweiten Endgelenkelement eine letzte um das Gelenkelement verschwenkbare Parallelogrammstruktur gebildet ist.

Somit hat das eingefahrene Gelenkstabsystem eine geringe Ausdehnung in Verfahrrichtung und das ausgefahrene Gelenkstabanordnung eine große Reichweite. Außerdem hat in jeder Verschwenkstellung das Gelenkstabsystem eine hohe mechanische Steifigkeit.

Der erfindungsgemäße Deckenlift für einen Projektor, insbesondere einen Video-und/oder Daten-Projektor, ein LCD-Plasma-Multimedia-Gerät, einem Notebook, einem PC-System, weist eine Projektorbefestigungseinrichtung zum Befestigen eines Projektors und mindestens ein erfindungsgemäßes aus- und einfahrbares Gelenkstabsystem auf, wobei das erste Endgelenkelement an eine Zimmerdecke anbringbar ist und an dem zweiten Endgelenkelement die Projektorbefestigungseinrichtung befestigt ist.

Somit hat der Deckenlift im Einfahrzustand eine geringe Bauhöhe und im Ausfahrzustand eine große Reichweite, wobei der Deckenlift in jeder Verfahrposition mechanisch stabil ist.

### Vorteilhafte Weiterbildungen der Erfindung

Bevorzugt ist das Kopplungsmittel ein Kopplungsstab mit einem ersten Längsende, das an dem Längsendbereich des ersten Hauptstabs um einen vorbestimmten ersten Abstand in Längsrichtung des ersten Hauptstabs weg von dem ersten Hauptstabgelenk nach außen mittels eines ersten Kopplungsstabgelenks gelenkig befestigt ist, und einem zweiten Längsende, das an dem Längsendbereich des zweiten Hauptstabs um den vorbestimmten ersten Abstand senkrecht zur Längsrichtung des zweiten Hauptstabs weg von dem zweiten Hauptstabgelenk in Richtung zum ersten Hauptstab mittels eines zweiten Kopplungsstabgelenks gelenkig befestigt ist.

Damit ist vorteilhaft eine mechanisch stabile Kopplung zwischen den Hauptstäben erzielt, die die Lage der Hauptstäbe in jeder Verschwenkstellung spiegelsymmetrisch festlegt.

Ferner ist es bevorzugt, dass die Hauptstäbe und die Nebenstäbe derart angeordnet sind, dass bei eingeklappter Gelenkstabanordnung die Hauptstäbe unmittelbar benachbart angeordnet sind, und in der von den Parallelogrammstrukturen beschriebenen Ebene die Drehpunkte des ersten und des zweiten Hauptstabgelenks und des ersten und des zweiten Nebenstabgelenks ein gleichschenkliges Trapez beschreiben, dessen parallele Seiten senkrecht zu den Längsachsen der Hauptstäbe verlaufen und dessen Eckpunkte an den stumpfen Innenwinkeln von den Drehpunkten des ersten und des zweiten Hauptstabgelenks gebildet sind, wobei die Drehpunkte des ersten und des zweiten Nebenstabgelenks in Längsrichtung der Hauptstäbe weg nach außen von den ersten Hauptstabgelenken angeordnet sind und die spitzen Innenwinkel des Trapezes ein vorbestimmter erster Winkel und der Abstand des Drehpunkts des ersten Hauptstabgelenks von dem Drehpunkt des ersten Nebenstabgelenks ein vorbestimmter zweiter Abstand ist.

Die Gelenke sind bevorzugt von in den Stäben vorgesehnen Löchern und darin gelagerten Bolzen gebildet.

Dadurch sind die Gelenke strukturell einfach aber mechanisch stabil und zuverlässig in ihrer Funktion aufgebaut.

Bevorzugt ist, dass das erste Hauptstabgelenk derart angeordnet ist, dass ihr Drehpunkt bei eingeklappter Gelenkstabanordnung auf halber Breite der Breite der Anordnung gebildet aus dem ersten Hauptstab und dem ersten Nebenstab angesiedelt ist und das zweite Hauptstabgelenk derart angeordnet ist, dass ihr Drehpunkt bei eingeklappter Gelenkstabanordnung auf halber Breite der Breite der Anordnung gebildet aus dem zweiten Hauptstab und dem zweiten Nebenstab angesiedelt ist.

Dadurch wird vorteilhaft erreicht, dass die eingeklappte Gelenkstabanordnung eine geringe Ausdehnung senkrecht zu den Längsrichtungen der Hauptstäbe und der Nebenstäbe hat.

Ferner ist es bevorzugt, dass an der dem ersten Nebenstab zugewandten Außenseite des ersten Hauptstabs dieser im Bereich des ersten Hauptstabgelenks als eine Öse ausgebildet ist, die bei eingeklappter Gelenkstabanordnung in eine in dem ersten Nebenstab vorgesehenen Aussparung eingreift, und an der dem zweiten Nebenstab zugewandten Außenseite des zweiten Hauptstabs dieser im Bereich des zweiten Hauptstabgelenks als eine Öse ausgebildet ist, die bei eingeklappter Gelenkstabanordnung in eine in dem zweiten Nebenstab vorgesehenen Aussparung eingreift.

Dadurch wird erreicht, dass die Hauptstäbe und die Nebenstäbe im Einklappzustand dicht beieinander liegen und somit eine geringe Ausdehnung in Richtung senkrecht zu den Längsachsen der Hauptstäbe und Nebenstäbe haben. Ferner sind die Gelenke der Hauptstäbe stabil ausgebildet.

Alternativ ist es bevorzugt, dass die Hauptstäbe und die Nebenstäbe derart angeordnet sind, dass bei eingeklappter Gelenkstabanordnung der erste Nebenstab zwischen den beiden Hauptstäben angeordnet ist, ein gedachter Punkt spiegelsymmetrisch zum Drehpunkt des ersten Nebenstabgelenks bezüglich des Drehpunkt des ersten Hauptstabgelenks angeordnet ist und in der von den Parallelogrammstrukturen beschriebenen Ebene die Drehpunkte des ersten und des zweiten Hauptstabgelenks, des zweiten Nebenstabgelenks und des gedachten Punkts ein gleichschenkliges Trapez beschreiben, dessen parallele Seiten senkrecht zu den Längsachsen der Hauptstäbe verlaufen und dessen Eckpunkte an den stumpfen Innenwinkeln von den Drehpunkten des ersten und des zweiten Hauptstabgelenks gebildet sind, wobei sowohl der Drehpunkt des zweiten Nebenstabgelenks als auch der gedachte Punkt in Längsrichtung der Hauptstäbe weg nach außen von den ersten Hauptstabgelenken angeordnet sind und die spitzen Innenwinkel des Trapezes ein vorbestimmter zweiter Winkel und der Abstand des Drehpunkts des zweiten Hauptstabgelenks von dem Drehpunkt des zweiten Nebenstabgelenks ein vorbestimmter dritter Abstand ist.

Ferner ist es bevorzugt, dass an der dem ersten Nebenstab zugewandten Außenseite des ersten Hauptstabs dieser im Bereich des ersten Hauptstabgelenks als eine Öse ausgebildet ist, die bei ausgeklappter Gelenkstabanordnung in eine in dem ersten Nebenstab vorgesehenen Aussparung eingreift und an der dem zweiten Nebenstab zugewandten Außenseite des zweiten Hauptstabs dieser im Bereich des zweiten Hauptstabgelenks als eine Öse ausgebildet ist, die bei eingeklappter Gelenkstabanordnung in eine in dem zweiten Nebenstab vorgesehenen Aussparung eingreift.

Dadurch wird erreicht, dass die Hauptstäbe und die Nebenstäbe im Einklappzustand dicht beieinander liegen und somit eine geringe Ausdehnung in Richtung senkrecht zu den Längsachsen der Hauptstäbe und Nebenstäbe haben. Ferner sind die Gelenke der Hauptstäbe stabil ausgebildet.

Bevorzugt ist, dass in der von den Parallelogrammstrukturen beschriebenen Ebene die Breite der Hauptstäbe größer ist als die Breite der Nebenstäbe.

Da die Hauptstäbe beim. Ein- und/oder Ausklappen unter Zug- und/oder Druckbeanspruchung den größten Teil dieser Beanspruchung aufnehmen, ist die Aufteilung der mechanischen Last auf die Hauptstäbe und die Nebenstäbe gleichmäßig aufgrund der großen Breite der Hauptstäbe verglichen mit der Breite der Nebenstäbe. Dadurch sind die Hauptstäbe und die Nebenstäbe entsprechend ihrer mechanischen Belastung optimiert dimensioniert, wodurch das Gewicht der Gelenkstabanordnung gering ist und die eingeklappte Gelenkstabanordnung eine geringe Ausdehnung senkrecht zu den Längsrichtungen der Hauptstäbe und der Nebenstäbe hat.

Bevorzugt ist das Gelenkelement als eine parallel zu der von den Parallelogrammstrukturen beschriebenen Ebene verlaufenden Platte ausgebildet.

Ferner ist es bevorzugt, dass die Endgelenkelemente als zwei zueinander parallel angeordnete und parallel zu der von den Parallelogrammstrukturen beschriebenen Ebene verlaufende Platten ausgebildet sind, zwischen denen die Längsendbereiche des ersten Hauptstabs und des ersten Nebenstabs bzw. des letzten Hauptstabs und des letzten Nebenstabs angeordnet sind.

Dadurch ist eine einfache und kostengünstige Struktur der Gelenkelemente und somit des Gelenkstabsystems erreicht.

Bevorzugt ist, dass der erfindungsgemäße Deckenlift ein erstes und ein zweites aus- und einfahrbares Gelenkstabsystem aufweist, wobei das erste Gelenkstabsystem bezüglich der von den Parallelogrammstrukturen beschriebenen Ebene spiegelbildlich zur zweiten Parallelogrammstruktur ausgebildet und angeordnet ist.

Ferner ist es bevorzugt, dass die Projektorbefestigungseinrichtung zwischen den beiden Gelenkstabsystemen vorgesehen ist, so dass der Projektor zwischen den beiden Gelenkstabsystemen platziert montierbar ist und die beiden Gelenkstabsysteme seitlich von dem Projektor angeordnet sind.

Dadurch ist das Gelenkstabsystem im Einfahrzustand neben der Projektorbefestigungseinrichtung angeordnet. Somit hat der Deckenlift bei eingefahrenem Gelenkstabsystem eine vorteilhaft geringe Bauhöhe.

Bevorzugt weist der Deckenlift eine Energiekette auf, die zur Führung von einem für die Energieversorgung des Projektors und/oder zum Datentransfer vom/zum Projektor bereitstellbaren Kabel vorgesehen ist, wobei das eine Ende der Energiekette relativ zum ersten Endgelenkelement festgelegt ist und das andere Ende der Energiekette relativ zum zweiten Endgelenkelement festgelegt ist.

Dadurch, dass das Kabel innerhalb der Energiekette kontrolliert und nach außen abgeschirmt geführt ist, kann das Kabel beim Verfahren des Gelenkstabsystems nicht an Teilen des Deckenlifts scheuern oder hängen bleiben. Dadurch ist der Deckenlift beim Verfahren von der Minimalreichweite bis zur Maximalreichweite sicher betreibbar.

Alternativ ist es bevorzugt, dass die Projektorbefestigungseinrichtung in Verlängerung zu den beiden Gelenkstabsystemen vorgesehen ist, so dass der Projektor in Verlängerung zu den beiden Gelenkstabsystemen platziert montierbar ist und die beiden Gelenkstabsysteme an der Oberseite an dem Projektor angeordnet sind.

Dadurch ist das Gelenkstabsystem im Einfahrzustand oberhalb der Projektorbefestigungseinrichtung angeordnet. Somit hat der Deckenlift bei ausgefahrenem Gelenkstabsystem eine vorteilhaft große Maximalreichweite.

Bevorzugt sind an den Gelenkelementen Achsen vorgesehen und befestigt, die jeweils zwei sich entsprechende Gelenkelemente starr miteinander verbinden.

Dadurch wird eine vorteilhafte Versteifung der Gelenkstabsysteme erreicht, wodurch die strukturelle Steifigkeit des Deckenlifts hoch ist.

Ferner ist es bevorzugt, dass an den Achsen Kabelführungsbögen vorgesehen und befestigt sind, die zur Führung von für die Energieversorgung des Projektors und/oder zum Datentransfer vom/zum Projektor bereitstellbaren Kabeln vorgesehen ist.

Dadurch, dass das Kabel an den Gelenkstabsystemen innerhalb Kabelführungsbögen kontrolliert und geführt ist, kann das Kabel beim Verfahren des Gelenkstabsystems nicht an Teilen des Deckenlifts scheuern oder hängen bleiben. Dadurch ist der Deckenlift beim Verfahren von der Minimalreichweite bis zur Maximalreichweite sicher betreibbar. Ferner ist durch die Kabelführungsbögen das Kabel spannungsfrei geführt, so dass die Gefahr eines Kabelbruchs unterbunden ist.

### Kurzbeschreibung der Zeichnungen

Nachfolgend werden Ausführungsbeispiele eines erfindungsgemäßen Gelenkstabsystems und von erfindungsgemäßen Deckenliften anhand der beigefügten schematischen Zeichnungen näher erläutert. Es zeigt:
- Fig. 1: eine Vorderansicht einer Ausführungsform des Gelenkstabsystems,
- Fig. 2: eine Hinteransicht des Gelenkstabsystems aus Fig. 1,
- Fig. 3: eine perspektivische Ansicht des Gelenkstabsystems aus Fig. 1,
- Fig. 4: eine perspektivische Ansicht einer ersten Ausführungsform des Deckenlifts,
- Fig. 5: eine Seitenansicht des Deckenlifts aus Fig. 4,
- Fig. 6: eine Frontansicht des Deckenlifts aus Fig. 4,
- Fig. 7: eine perspektivische Ansicht des Deckenlifts aus Fig. 4 mit einer Energiekette,
- Fig. 8: eine perspektivische Ansicht der Energiekette aus Fig. 7,
- Fig. 9: eine perspektivische Ansicht des Deckenlifts aus Fig. 4 eingebaut in eine Zimmerdecke,

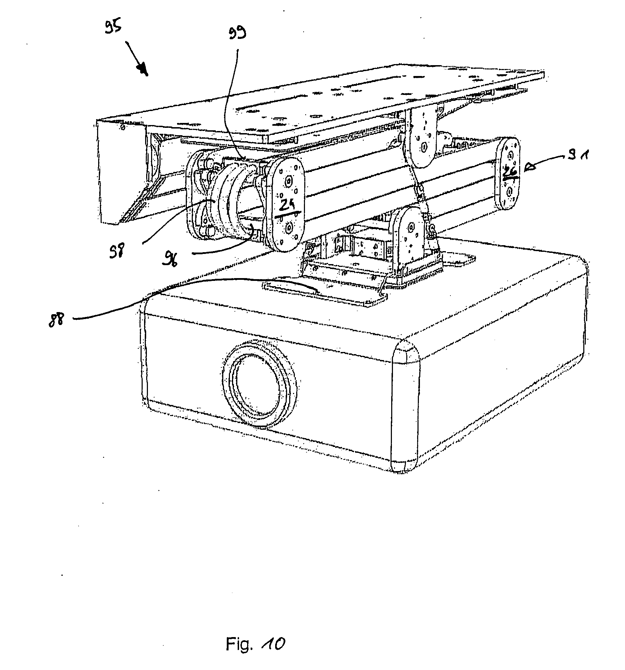

- Fig. 10: eine perspektivische Ansicht einer zweiten Ausführungsform des Deckenlifts,

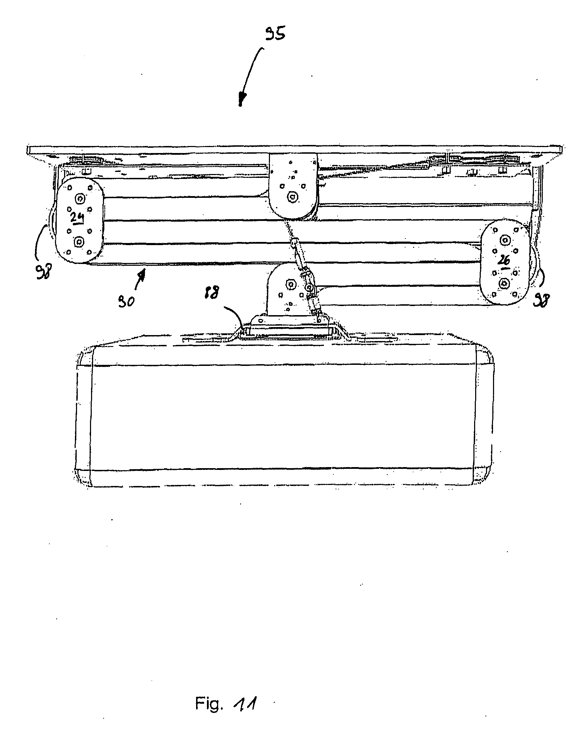

- Fig. 11: eine Seitenansicht des Deckenlifts aus Fig. 10,

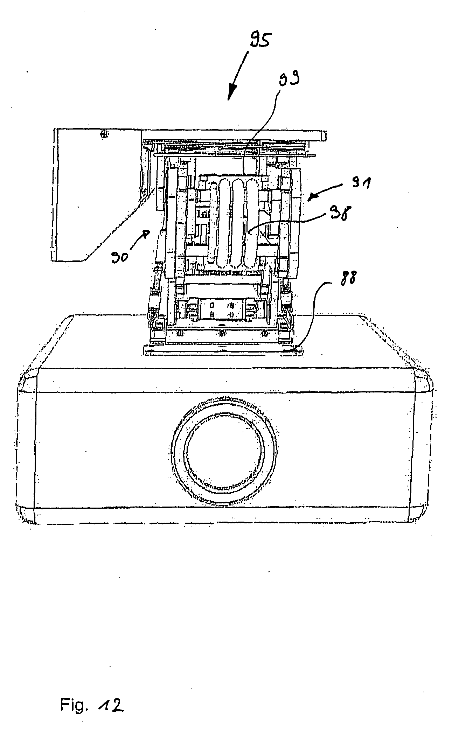

- Fig.12: eine Frontansicht des Deckenlifts aus Fig. 10,

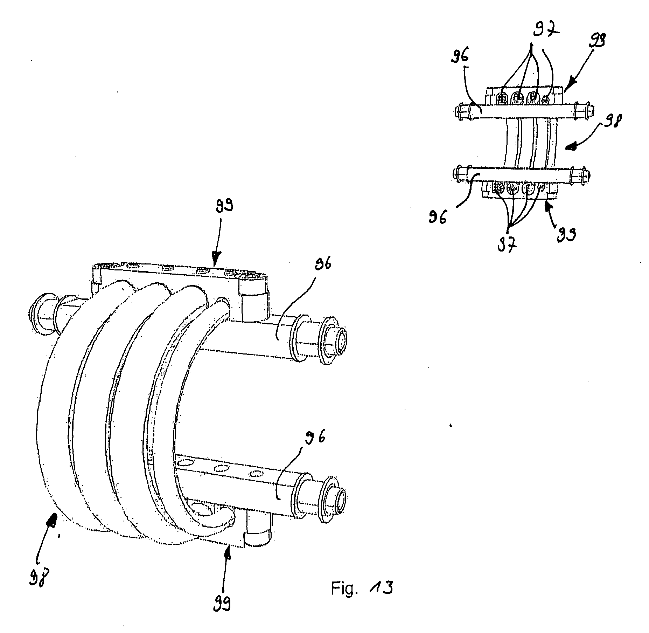

- Fig. 13: eine perspektivische Ansicht von Achsen und Kabelbögen, und
- Fig. 14: ein herkömmlicher Deckenlift

### Detaillierte Beschreibung des Ausführungsbeispiels

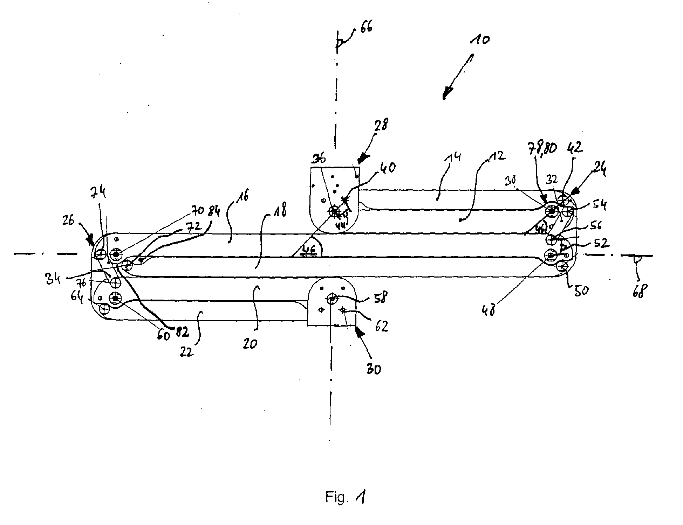

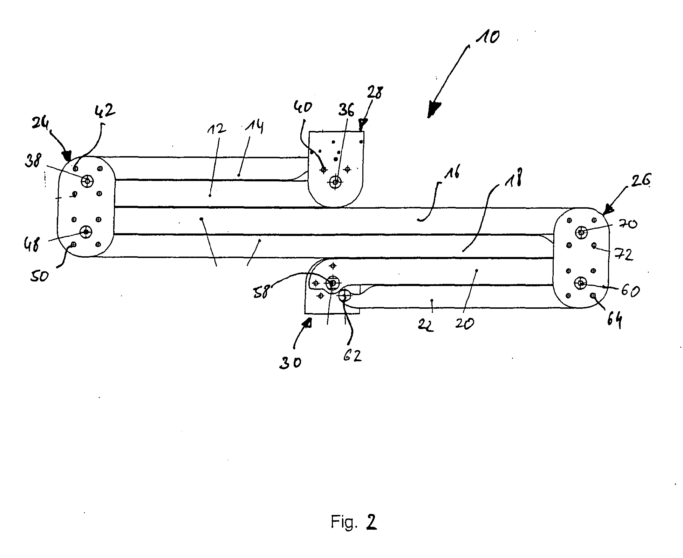

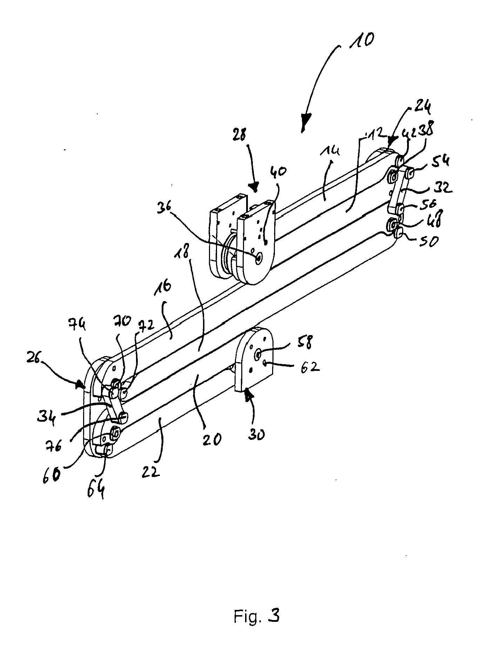

Fig. 1 bis 3 zeigen ein aus- und einfahrbares Gelenkstabsystem 10 im Einfahrzustand. Das Gelenkstabsystem 10 weist einen ersten Hauptstab 12, einen ersten Nebenstab 14, einen zweiten Hauptstab 16, einen zweiten Nebenstab 18, einen dritten Hauptstab 20 und einen dritten Nebenstab 22 auf. Der erste Nebenstab 14 ist in Fig. 1 oben und unmittelbar benachbart zum ersten Hauptstab 16 angeordnet, der in Fig. 1 unterhalb des Nebenstabs 14 unmittelbar benachbart zum zweiten Hauptstab 16 angeordnet ist. Ferner ist der zweite Hauptstab 12 unmittelbar benachbart zum zweiten Nebenstab 18 angeordnet, der unmittelbar benachbart zum dritten Hauptstab 20 angeordnet ist, an den wiederum unmittelbar benachbart der dritte Nebenstab 22 angeordnet ist. Ferner sind die Längsachsen der Stäbe 12, 14, 16, 18, 20, 22 parallel zueinander verlaufend angeordnet.

Das Gelenkstabsystem 10 weist ein erstes Gelenkelement 24, ein zweites Gelenkelement 26, ein oberes Endgelenkelement 28 und ein unteres Endgelenkelement 30 auf. Das erste Gelenkelement 24 und das zweite Gelenkelement 26 sind als parallel zur Zeichenebene der Fig. 1 sich erstreckende Platten ausgebildet. Das obere Endgelenkelement 28 und das untere Endgelenkelement 30 sind jeweils als zwei übereinander liegende parallel zur Zeichenebene der Fig. 1 sich erstreckende Platten ausgebildet.

Der in Fig. 1 links gezeigte Längsendbereich des ersten Hauptstabs 12 weist ein linkes erstes Hauptstabgelenk 36 auf, der in Fig. 1 rechts gezeigte Längsendbereich des ersten Hauptstabs 12 weist ein rechtes erstes Hauptstabgelenk 38 auf, der in Fig. 1 links gezeigte Längsendbereich des ersten Nebenstabs 14 weist ein linkes erstes Nebenstabgelenk 40 auf und der in Fig. 1 rechts gezeigte Längsendbereich des ersten Nebenstabs 12 weist ein rechtes erstes Nebenstabgelenk 42 auf.

Sowohl der erste Hauptstab 12 ist mit seinem linken ersten Hauptstabgelenk 36 als auch der erste Nebenstab 14 ist mit seinem linken ersten Nebenstabgelenk 40 mit dem oberen Endgelenkelement 28 gelenkig verbunden, wobei in der Zeichenebene der Fig. 1 das linke erste Hauptstabgelenk 36 von dem linken ersten Nebenstabgelenk 40 in einem Abstand 44 angeordnet ist und eine gedachte Verbindungsgerade von dem linken ersten Hauptstabgelenk 36 und dem linken ersten Nebenstabgelenk 40 in der Zeichenebene der Fig. 1 nach rechts geneigt ist und mit der Längsachse des ersten Hauptstabs 12 einen Winkel 46 von 45° einschließt. Ferner ist sowohl der erste Hauptstab 12 mit seinem rechten ersten Hauptstabgelenk 38 als auch der erste Nebenstab 14 ist mit seinem rechten ersten Nebenstabgelenk 42 mit dem ersten Gelenkelement 24 gelenkig verbunden, wobei in der Zeichenebene der Fig. 1 das rechte erste Hauptstabgelenk 38 von dem rechten ersten Nebenstabgelenk 42 im Abstand 44 angeordnet ist und eine gedachte Verbindungsgerade von dem rechten ersten Hauptstabgelenk 38 und dem rechten ersten Nebenstabgelenk 42 in der Zeichenebene der Fig. 1 nach rechts geneigt ist und mit der Längsachse des ersten Hauptstabs 12 den Winkel 46 einschließt, so dass der Hauptstab 12, der Nebenstab 14, das obere Endgelenkelement 28 und das erste Gelenkelement 24 eine Parallelogrammstruktur bilden.

Der in Fig. 1 rechts gezeigte Längsendbereich des zweiten Hauptstabs 16 weist ein rechtes zweites Hauptstabgelenk 48 auf und der in Fig. 1 rechts gezeigte Längsendbereich des zweiten Nebenstabs 18 weist ein rechtes zweites Nebenstabgelenk 50 auf.

Sowohl der zweite Hauptstab 16 ist mit seinem rechten zweiten Hauptstabgelenk 48 als auch der zweite Nebenstab 18 ist mit seinem rechten zweiten Nebenstabgelenk 50 mit dem ersten Gelenkelement 24 gelenkig verbunden, so dass das rechte erste Hauptstabgelenk 38, das rechte erste Nebenstabgelenk 42, das rechte zweite Hauptstabgelenk 48 und das rechte zweite Nebenstabgelenk 50 in der Zeichenebene der Fig. 1 ein gleichschenkliges Trapez beschreiben. Die parallelen Seiten des Trapezes verlaufen senkrecht zu der Längsachse des ersten Hauptstabs 12. Die Eckpunkte des Trapezes an den stumpfen Innenwinkeln sind von dem rechten ersten Hauptstabgelenk 38 und dem rechten zweiten Hauptstabgelenk 48 gebildet sind, wobei das rechte erste Nebenstabgelenk 42 und das rechte zweite Nebenstabgelenk 50 in Längsrichtung des Hauptstabes 12 nach rechts in Fig. 1 angeordnet sind. Ferner sind die spitzen Innenwinkel des Trapezes der Winkel 46.

Das Gelenkstabsystem weist einen ersten Kopplungsstab 32 auf mit einem ersten Längsende und einem daran angesiedelten ersten Kopplungsstabgelenk 54. Der erste Kopplungsstab 32 ist mit seinem ersten Kopplungsstabgelenk 54 an dem rechten Längsendbereich des ersten Hauptstabs 12 um einen Abstand 52 in Längsrichtung des ersten Hauptstabs 12 in Fig. 1 rechts weg von dem rechten ersten Hauptstabgelenk 38 gelenkig befestigt. Der erste Kopplungsstab 32 hat ein seinem ersten Längsende abgewandtes zweites Längsende und ein daran angesiedeltes zweites Kopplungsstabgelenk 56. Der erste Kopplungsstab 32 ist mit seinem zweiten Kopplungsstabgelenk 56 an dem rechten Längsendbereich des zweiten Hauptstabs 16 um den vorbestimmten Abstand 52 senkrecht zur Längsrichtung des zweiten Hauptstabs 16 in Fig. 1 nach oben weg von dem rechten zweiten Hauptstabgelenk 38 gelenkig befestigt.

Der in Fig. 1 rechts gezeigte Längsendbereich des dritten Hauptstabs 20 weist ein rechtes drittes Hauptstabgelenk 58 auf, der in Fig. 1 links gezeigte Längsendbereich des dritten Hauptstabs 20 weist ein linkes drittes Hauptstabgelenk 60 auf, der in Fig. 1 rechts gezeigte Längsendbereich des dritten Nebenstabs 22 weist ein rechtes drittes Nebenstabgelenk 62 auf und der in Fig. 1 links gezeigte Längsendbereich des dritten Nebenstabs 22 weist ein linkes drittes Nebenstabgelenk 64 auf.

Sowohl achsensymmetrisch zur in Fig. 1 gezeigten senkrechten Achse 66 als auch zur waagrechten Achse 68 ist das untere Endgelenkelement 30 bezüglich dem oberen Endgelenkelement 28, der dritte Hauptstab 20 mit seinen linken und rechten dritten Hauptstabgelenken 60, 58 bezüglich dem ersten Hauptstab 12 mit seinen rechten und linken ersten Hauptstabgelenken 38, 36, der dritte Nebenstab 22 mit seinen linken und rechten dritten Nebenstabgelenken 64, 62 bezüglich dem ersten Nebenstab 14 mit seinen linken und rechten ersten Nebenstabgelenken 40,42.

Der in Fig. 1 links gezeigte Längsendbereich des zweiten Hauptstabs 16 weist ein linkes zweites Hauptstabgelenk 70 auf und der in Fig. 1 links gezeigte Längsendbereich des zweiten Nebenstabs 18 weist ein linkes zweites Nebenstabgelenk 72 auf.

Sowohl der zweite Hauptstab 16 ist mit seinem linken zweiten Hauptstabgelenk 70 als auch der zweite Nebenstab 18 ist mit seinem linken zweiten Nebenstabgelenk 72 mit dem zweiten Gelenkelement 26 gelenkig verbunden, so dass das linke dritte Hauptstabgelenk 60, das linke dritte Nebenstabgelenk 6, das linke zweite Hauptstabgelenk 70 und ein gedachter Spiegelpunkt spiegelsymmetrisch zum linken zweiten Nebenstabgelenk 72 bezüglich des linken zweiten Hauptstabgelenks 70 in der Zeichenebene der Fig. 1 ein gleichschenkliges Trapez beschreiben. Die parallelen Seiten des Trapezes verlaufen senkrecht zu der Längsachse des dritten Hauptstabs 20. Die Eckpunkte des Trapezes an den stumpfen Innenwinkeln sind von dem linken dritten Hauptstabgelenk 60 und dem linken zweiten Hauptstabgelenk 70 gebildet sind, wobei das linke dritte Nebenstabgelenk 64 und der Spiegelpunkt in Längsrichtung des dritten Hauptstabes 20 nach links in Fig. 1 angeordnet sind. Ferner sind die spitzen Innenwinkel des Trapezes der Winkel 46.

Das Gelenkstabsystem 110 weist einen zweiten Kopplungsstab 34 auf mit einem ersten Längsende und einem daran angesiedelten dritten Kopplungsstabgelenk 74. Der zweite Kopplungsstab 34 ist mit seinem dritten Kopplungsstabgelenk 74 an dem Längsendbereich des dritten Hauptstabs 20 um einen Abstand 52 in Längsrichtung des dritten Hauptstabs 20 in Fig. 1 links weg von dem linken zweiten Hauptstabgelenk 70 gelenkig befestigt. Der zweite Kopplungsstab 34 hat ein seinem ersten Längsende abgewandtes zweites Längsende und ein daran angesiedeltes viertes Kopplungsstabgelenk 76. Der zweite Kopplungsstab 34 ist mit seinem vierten Kopplungsstabgelenk 76 an dem Längsendbereich des dritten Hauptstabs 20 um den vorbestimmten Abstand 52 senkrecht zur Längsrichtung des dritten Hauptstabs 206 in Fig. 1 nach oben weg von dem linken dritten Hauptstabgelenk 58 gelenkig befestigt.

Alle vorhergehenden Gelenke sind von in den Stäben bzw. Gelenkelementen vorgesehnen Löchern und darin gelagerten Bolzen gebildet.

An der dem ersten Nebenstab 14 zugewandten Außenseite des ersten Hauptstabs 12 ist dieser im Bereich des rechten ersten Hauptstabgelenks 38 als eine erste Öse 78 ausgebildet ist, die in eine in dem ersten Nebenstab 14 vorgesehene erste Aussparung 80 eingreift. Ferner ist an der dem zweiten Nebenstab 18 zugewandten Außenseite des zweiten Hauptstabs 16 dieser im Bereich des linken zweiten Hauptstabgelenks 70 als eine zweite Öse 82 ausgebildet ist, die bei-ausgeklappter Gelenkstabanordnung in eine in dem zweiten Nebenstab 18 vorgesehenen zweiten Aussparung 84 eingreifen kann.

Die die Breite der Hauptstäbe 12, 16, 20 ist größer ist als die Breite der Nebenstäbe 14, 18, 22.

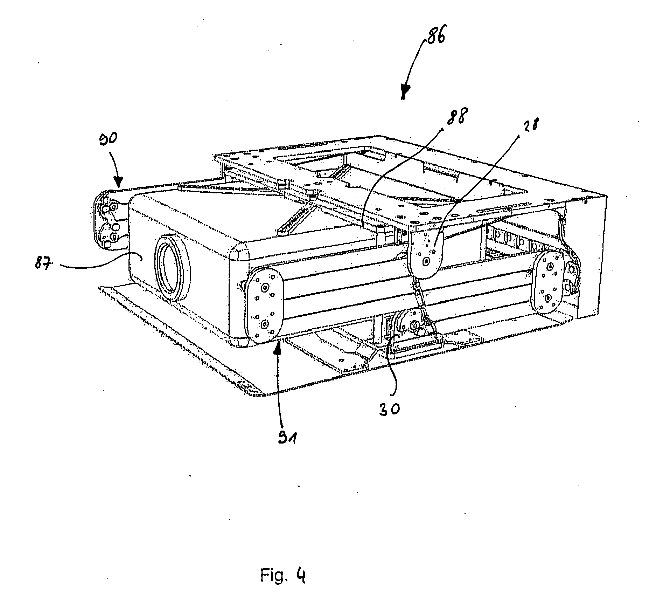

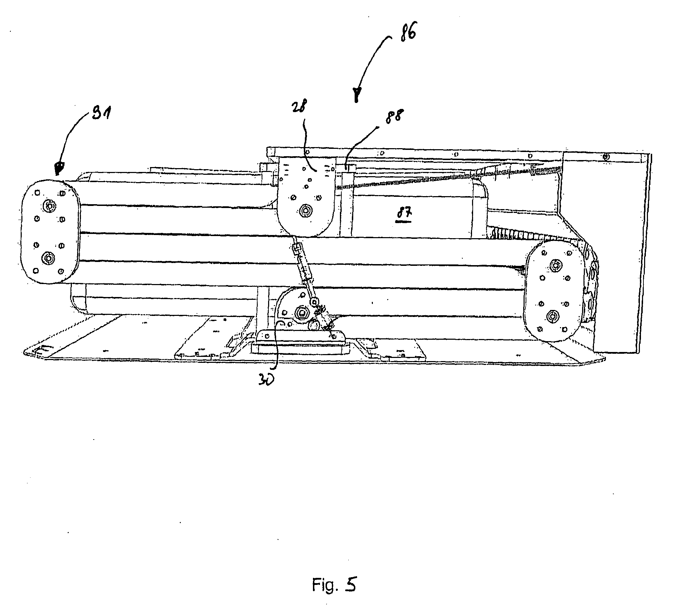

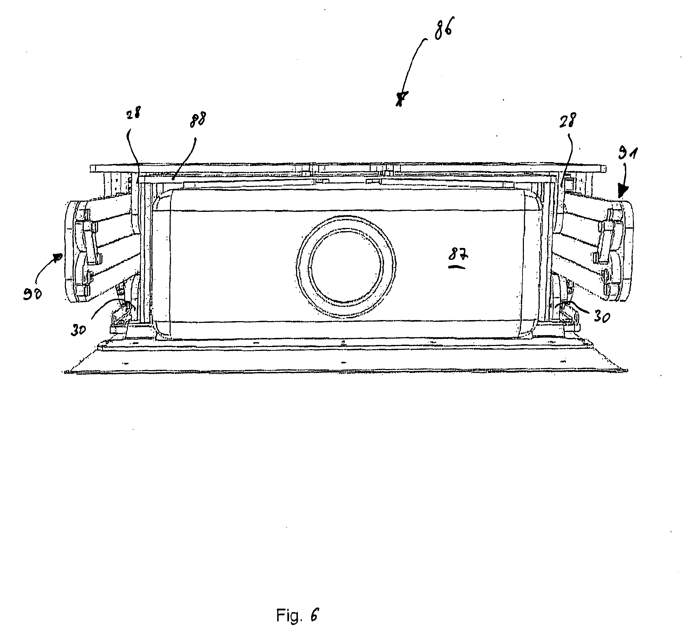

In Fig. 4 bis 6 ist eine erste Ausführungsform eines Deckenlifts 860 für einen Projektor 87 gezeigt. Der Deckenlift 86 weist eine Projektorbefestigungseinrichtung 88 auf, in der der Projektor 87 befestigt ist. Ferner weist der Deckenlift 86 ein linkes Gelenkstabsystem 90, das wie das vorhergehende Gelenkstabsystem ausgebildet ist, und ein rechtes Gelenkstabsystem 91 auf, das seitenvertauscht bezüglich des linken Gelenkstabsystems 90 ausgebildet ist.

Die oberen Endgelenkelemente 28 sind an eine Zimmerdecke anbringbar und an den unteren Endgelenkelementen 30 ist die Projektorbefestigungseinrichtung 88 befestigt.

Die Projektorbefestigungseinrichtung 88 ist zwischen den beiden Gelenkstabsystemen 90, 91 angeordnet, wobei der Projektor 87 zwischen den beiden Gelenkstabsystemen 90, 91 platziert ist. Die beiden Gelenkstabsysteme 90, 91 sind jeweils seitlich von dem Projektor 87 angeordnet.

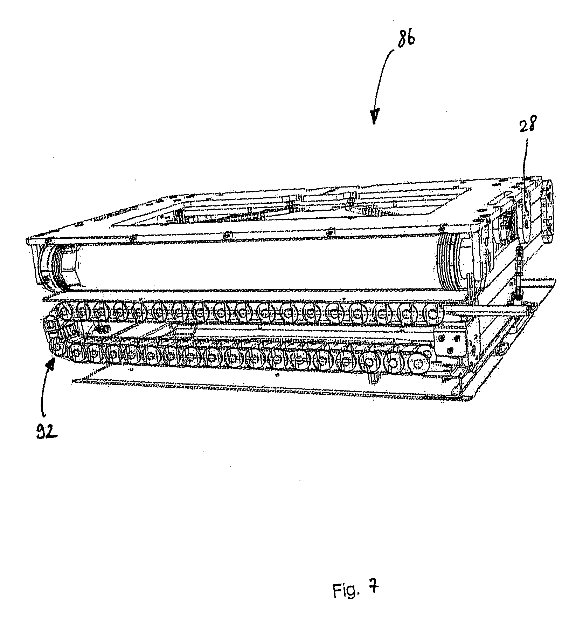

Wie es in Fig. 7 und 8 gezeigt ist, weist der Deckenlift 86 eine Energiekette 92 auf, die zur Führung von einem für die Energieversorgung des Projektors 87 bereitgestellten Kabels 97 vorgesehen ist. Das eine Ende der Energiekette 92 ist relativ zu den oberen Endgelenkelementen 28 befestigt und das andere Ende der Energiekette 92 ist relativ zu den unteren Endgelenkelementen 30 befestigt.

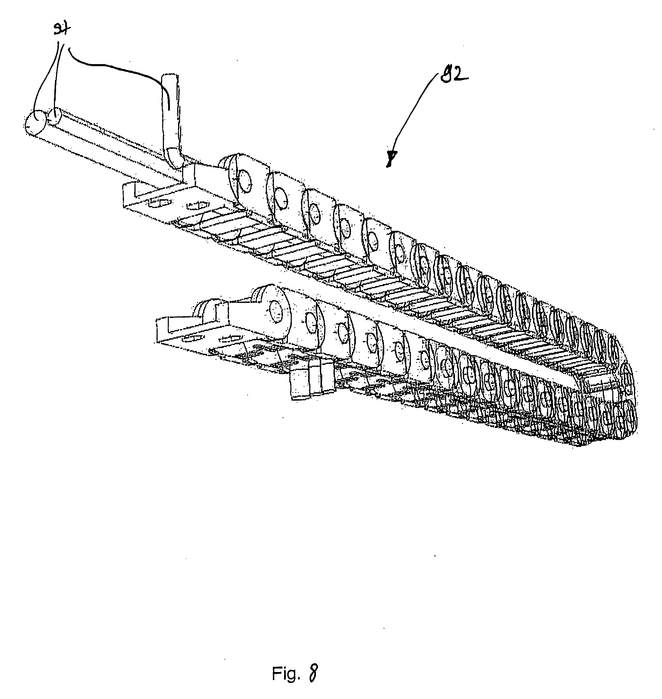

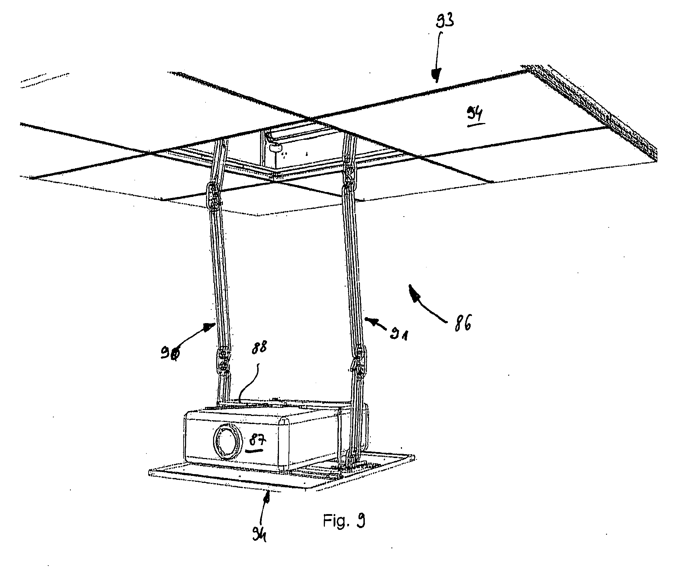

Fig. 9 zeigt den Deckenlift 86, der an eine Zimmerdecke montiert ist. Die Zimmerdecke ist von einer abgehängten Deckenverkleidung 93 verkleidet, die Deckenverkleidungselemente 94 aufweist. Der Deckenlift 86 ist in den Holraum eingebaut, der oberhalb des Deckenverkleidungselements 94 angesiedelt ist. An der Unterseite des Deckenlifts 86 ist das Deckenverkleidungselement 94 befestigt, so dass bei eingefahrenen Gelenkstabsystemen 90, 91 die Deckenverkleidung 93 plan ist. In Fig. 9 ist der Deckenlift 86 mit ausgefahrenen Gelenkstabsystemen 90, 91 gezeigt, so dass der Deckenlift 86 unterhalb der Deckenverkleidung 93 platziert ist.

In Fg. 10 bis 13 ist eine zweite Ausführungsform eines Deckenlifts 95 gezeigt. Die Projektorbefestigungseinrichtung 88 ist in Verlängerung zu den beiden Gelenkstabsystemen 90, 91 vorgesehen ist, so dass der Projektor 87 in Verlängerung zu den beiden Gelenkstabsystemen 90, 91 platziert ist. Die beiden Gelenkstabsysteme 90, 91 sind an der Oberseite an dem Projektor 87 angeordnet.

Der Deckenlift 95 weist Achsen 96 auf, die an den Gelenkelementen 90, 91 befestigt sind und die jeweils zwei sich entsprechenden Gelenkelementen 24, 26 starr miteinander verbinden. Ferner weist der Deckenlift 95 an den Achsen 96 Kabelführungsbögen 98 auf, die an den Achsen 96 zur Führung des für die Energieversorgung des Projektors vorgesehenen Kabels 97 vorgesehen sind. Die Kabetführungsbögen 98 sind mit Klemmen 99 an den Achsen fest befestigt.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Gelenkstabsystem
- 12: erster Hauptstab
- 14: erster Nebenstab
- 16: zweiter Hauptstab
- 18: zweiter Nebenstab
- 20: dritter Hauptstab
- 22: dritter Nebenstab
- 24: erstes Gelenkelement
- 26: zweites Gelenkelement
- 28: oberes Endgelenkelement
- 30: unteres Endgelenkelement
- 32: erster Kopplungsstab
- 34: zweiter Kopplungsstab
- 36: linkes erstes Hauptstabgelenk
- 38: rechtes erstes Hauptstabgelenk
- 40: linkes erstes Nebenstabgelenk
- 42: rechtes erstes Nebenstabgelenk
- 44: Abstand
- 46: Winkel
- 48: rechtes zweites Hauptstabgelenk
- 50: rechtes zweites Nebenstabgelenk
- 52: Abstand
- 54: erstes Kopplungsstabgelenk
- 56: zweites Kopplungstabgelenk
- 58: rechtes drittes Hauptstabgelenk
- 60: linkes drittes Hauptstabgelenk
- 62: rechtes drittes Nebenstabgelenk
- 64: linkes drittes Nebenstabgelenk
- 66: senkrechte Achse
- 68: waagrechte Achse
- 70: linkes zweites Hauptstabgelenk
- 72: linkes zweites Nebenstabgelenk
- 74: drittes Kopplungsstabgelenk
- 76: viertes Kopplungstabgelenk
- 78: erste Öse
- 80: erste Aussparung
- 82: zweite Öse
- 84: zweite Aussparung
- 86: erste Ausführungsform Deckenlift
- 87: Projektor
- 88: Projektorbefestigungseinrichtung
- 90: linkes Gelenkstabsystem
- 91: rechtes Gelenkstabsystem
- 92: Energiekette
- 93: Deckenverkleidung
- 94: Deckenverkleidungselemente
- 95: zweite Ausführungsform Deckenlift
- 96: Achse
- 97: Kabel
- 98: Kabelführungsbogen
- 99: Klemme
- 110: Deckenlift
- 112: Grundplatte
- 113: Halteplatte
- 114: Projektor
- 116: Deckenplatte
- 118: Seilzug
- 120 -: Kabel
- 122: Gestänge
- 124: Festlager
- 125: Loslager

## Patentansprüche

1. Aus- und einklappbare Gelenkstabanordnung mit einem ersten Hauptstab (12, 16) und einem ersten Nebenstab (14, 18), die jeweils einen Längsendbereich aufweisen, und einem Gelenkelement (24, 26), an das die Längsendbereiche derart voneinander versetzt mittels eines ersten Hauptstabgelenks (38, 70) bzw. eines ersten Nebenstabgelenks (42, 72) gelenkig befestigt sind, dass von dem ersten Hauptstab (12, 16), dem ersten Nebenstab (14, 18) und dem Gelenkelement (24, 26) eine erste um das Gelenkelement verschwenkbare Parallelogrammstruktur gebildet ist, einem zweiten Hauptstab (16, 20) mit einem an dem Gelenkelement (24, 26) mittels eines zweiten Hauptstabgelenks (48, 60) gelenkig befestigten Längsendbereich und einem zweiten Nebenstab (18, 22) mit einem Längsendbereich, der von dem Längsendbereich des zweiten Hauptstabs (16, 20) versetzt an das Gelenkelement (24, 26) mittels eines zweiten Nebenstabgelenks (50, 64) gelenkig derart befestigt ist, dass von dem zweiten Hauptstab (16, 20), dem zweiten Nebenstab (18, 22) und dem Gelenkelement eine zweite um das Gelenkelement (24, 26) verschwenkbare Parallelogrammstruktur gebildet ist, die in der von der ersten Paratteiogrammstruktur beschriebenen Ebene liegt, und einem Kopplungsmittel (32, 34), das mit den Längsendbereichen der Hauptstäbe (12, 16, 20) derart gekoppelt ist, dass die Parallelogrammstrukturen in jeder Verschwenkstellung spiegelsymmetrisch zueinander, bei eingeklappter Gelenkstabanordnung parallel nebeneinander liegend und bei ausgeklappter Gelenkstabanordnung miteinander fluchtend angeordnet sind.

2. Gelenkstabanordnung gemäß Anspruch 1, wobei das Kopplungsmittel ein Kopplungsstab (32, 34) mit einem ersten Längsende, das an dem Längsendbereich des ersten Hauptstabs (12, 16) um einen vorbestimmten ersten Abstand (52) in Längsrichtung des ersten Hauptstabs (12, 16) weg von dem ersten Hauptstabgelenk (38, 70) nach außen mittels eines ersten Kopplungsstabgelenks (54, 74) gelenkig befestigt ist, und einem zweiten Längsende ist, das an dem Längsendbereich des zweiten Hauptstabs (16, 20) um den vorbestimmten ersten Abstand (52) senkrecht zur Längsrichtung des zweiten Hauptstabs (16, 20) weg von dem zweiten Hauptstabgelenk (48, 60) in Richtung zum ersten Hauptstab (12, 16) mittels eines zweiten Kopplungsstabgelenks (56, 76) gelenkig befestigt ist.

3. Gelenkstabanordnung gemäß Anspruch 2, wobei die Hauptstäbe (12, 16) und die Nebenstäbe (14, 18) derart angeordnet sind, dass bei eingeklappter Gelenkstabanordnung die Hauptstäbe (12, 16) unmittelbar benachbart angeordnet sind, und in der von den Parallelogrammstrukturen beschriebenen Ebene die Drehpunkte des ersten und des zweiten Hauptstabgelenks (38, 48) und des ersten und des zweiten Nebenstabgelenks (42, 50) ein gleichschenkliges Trapez beschreiben, dessen parallele Seiten senkrecht zu den Längsachsen der Hauptstäbe (12, 16) verlaufen und dessen Eckpunkte an den stumpfen Innenwinkeln von den Drehpunkten des ersten und des zweiten Hauptstabgelenks (38, 48) gebildet sind, wobei die Drehpunkte des ersten und des zweiten Nebenstabgelenks (42, 50) in Längsrichtung der Hauptstäbe (12, 16) weg nach außen von den ersten Hauptstabgelenken (38, 48) angeordnet sind und die spitzen Innenwinkel des Trapezes ein vorbestimmter erster Winkel (46) und der Abstand des Drehpunkts des ersten Hauptstabgelenks (38) von dem Drehpunkt des ersten Nebenstabgelenks (42) ein vorbestimmter zweiter Abstand (44) ist.

4. Gelenkstabanordnung gemäß Anspruch 3, wobei die Gelenke (38, 42, 48, 50, 54, 56) von in den Stäben (12, 16, 14, 18, 32) vorgesehnen Löchern und darin gelagerte Bolzen gebildet sind.

5. Gelenkstabanordnung gemäß Anspruch 4, wobei das erste Hauptstabgelenk (38) derart angeordnet ist, dass ihr Drehpunkt bei eingeklappter Gelenkstabanordnung auf halber Breite der Breite der Anordnung gebildet aus dem ersten Hauptstab (12) und dem ersten Nebenstab (14) angesiedelt ist und das zweite Hauptstabgelenk (48) derart angeordnet ist, dass ihr Drehpunkt bei eingeklappter Gelenkstabanordnung auf halber Breite der Breite der Anordnung gebildet aus dem zweiten Hauptstab (16) und dem zweiten Nebenstab (18) angesiedelt ist.

6. Gelenkstabanordnung gemäß Anspruch 5, wobei an der dem ersten Nebenstab (14) zugewandten Außenseite des ersten Hauptstabs (12) dieser im Bereich des ersten Hauptstabgelenks (38) als eine Öse (78) ausgebildet ist, die bei eingeklappter Gelenkstabanordnung in eine in dem ersten Nebenstab (14) vorgesehenen Aussparung (80) eingreift und an der dem zweiten Nebenstab (18) zugewandten Außenseite des zweiten Hauptstabs (16) dieser im Bereich des zweiten Hauptstabgelenks (48) als eine Öse (82) ausgebildet ist, die bei eingeklappter Gelenkstabanordnung in eine in dem zweiten Nebenstab (18) vorgesehenen Aussparung (84) eingreift.

7. Gelenkstabanordnung gemäß Anspruch 2, wobei die Hauptstäbe (16, 20) und die Nebenstäbe (18, 22) derart angeordnet sind, dass bei eingeklappter Gelenkstabanordnung der erste Nebenstab (18) zwischen den beiden Hauptstäben (16, 20) angeordnet ist, ein gedachter Punkt spiegelsymmetrisch zum Drehpunkt des ersten Nebenstabgelenks (72) bezüglich des Drehpunkt des ersten Hauptstabgelenks (70) angeordnet ist und in der von den Parallelogrammstrukturen beschriebenen Ebene die Drehpunkte des ersten und des zweiten Hauptstabgelenks (70, 60), des zweiten Nebenstabgelenks (64) und des gedachten Punkts ein gleichschenkliges Trapez beschreiben, dessen parallele Seiten senkrecht zu den Längsachsen der Hauptstäbe (16, 20) verlaufen und dessen Eckpunkte an den stumpfen Innenwinkeln von den Drehpunkten des ersten und des zweiten Hauptstabgelenks (70, 60) gebildet sind, wobei sowohl der Drehpunkt des zweiten Nebenstabgelenks (64) als auch der gedachte Punkt in Längsrichtung der Hauptstäbe (16, 20) weg nach außen von den ersten Hauptstabgelenken (70, 60) angeordnet sind und die spitzen Innenwinkel des Trapezes ein vorbestimmter zweiter Winkel und der Abstand des Drehpunkts des zweiten Hauptstabgelenks (60) von dem Drehpunkt des zweiten Nebenstabgelenks (64) ein vorbestimmter dritter Abstand ist.

8. Gelenkstabanordnung gemäß Anspruch 7, wobei die Gelenke (70, 60, 72, 64, 54, 56) von in den Stäben (16, 20, 18, 22, 34) vorgesehnen Löchern und darin gelagerte Bolzen gebildet sind.

9. Gelenkstabanordnung gemäß Anspruch 8, wobei das erste Hauptstabgelenk (70) derart angeordnet ist, dass ihr Drehpunkt bei eingeklappter Gelenkstabanordnung auf halber Breite der Breite der Anordnung gebildet aus dem ersten Hauptstab (16) und dem ersten Nebenstab (18) angesiedelt ist und das zweite Hauptstabgelenk (60) derart angeordnet ist, dass ihr Drehpunkt bei eingeklappter Gelenkstabanordnung auf halber Breite der Breite der Anordnung gebildet aus dem zweiten Hauptstab (20) und dem zweiten Nebenstab (22) angesiedelt ist.

10. Gelenkstabanordnung gemäß Anspruch 9, wobei an der dem ersten Nebenstab (18) zugewandten Außenseite des ersten Hauptstabs (16) dieser im Bereich des ersten Hauptstabgelenks (70) als eine Öse (82) ausgebildet ist, die bei ausgeklappter Gelenkstabanordnung in eine in dem ersten Nebenstab (18) vorgesehenen Aussparung (84) eingreift und an der dem zweiten Nebenstab (22) zugewandten Außenseite des zweiten Hauptstabs (20) dieser im Bereich des zweiten Hauptstabgelenks (60) als eine Öse ausgebildet ist, die bei eingeklappter Gelenkstabanordnung in eine in dem zweiten Nebenstab (22) vorgesehenen Aussparung eingreift.

11. Gelenkstabanordnung gemäß einem der vorhergehenden Ansprüche, wobei in der von den Parallelogrammstrukturen beschriebenen Ebene die Breite der Hauptstäbe (16, 20) größer ist als die Breite der Nebenstäbe (18, 22).

12. Gelenkstabanordnung gemäß einem der vorhergehenden Ansprüche, wobei das Gelenkelement (26) als eine parallel zu der von den Parallelogrammstrukturen beschriebenen Ebene verlaufenden Platte ausgebildet ist.

13. Aus- und einfahrbares Gelenkstabsystem mit einer vorbestimmten Anzahl von sich abwechselnd aneinander anreihenden aus- und einklappbare Gelenkstabanordnungen gemäß einem der vorhergehenden Anspruche und zwei Endgelenkelementen (28, 30), an die jeweils die Längsendbereiche des ersten Hauptstabs (12), des ersten Nebenstabs (14) bzw. des letzten Hauptstabs (20) und des letzten Nebenstabs (22) derart voneinander versetzt befestigt sind, dass von dem ersten Hauptstab (12), dem ersten Nebenstab (14) und dem ersten Endgelenkelement (28) eine erste um das Endgelenkelement (28) verschwenkbare Parallelogrammstruktur gebildet ist bzw. von dem letzten Hauptstab (20), dem letzten Nebenstab (22) und dem zweiten Endgelenkelement (30) eine letzte um das Gelenkelement (30) verschwenkbare Parallelogrammstruktur gebildet ist.

14. Gelenkstabsystem gemäß Anspruch 13, wobei die Endgelenkelemente (28, 30) als zwei zueinander parallel angeordnete und parallel zu der von den Parallelogrammstrukturen beschriebenen Ebene verlaufende Platten ausgebildet sind, zwischen denen die Längsendbereichen des ersten Hauptstabs (12) und des ersten Nebenstabs (14) bzw. des letzten Hauptstabs (20) und .des letzten Nebenstabs (22) angeordnet sind.

15. Deckenlift für einen Projektor, insbesondere einen Video- und/oder Daten-Projektor, mit einer Projektorbefestigungseinrichtung (88) zum Befestigen eines Projektors (87) und mindestens einem aus- und einfahrbaren Gelenkstabsystem (10) gemäß einem der vorhergehenden Ansprüche, wobei das erste Endgelenkelement (28) an eine Zimmerdecke anbringbar ist und an dem zweiten Endgelenkelement (30) die Projektorbefestigungseinrichtung (88) befestigt ist.

16. Deckenlift gemäß Anspruch 15, wobei ein erstes und ein zweites aus- und einfahrbares Gelenkstabsystem (10) gemäß einem Ansprüche 1 bis 14 vorgesehen sind, wobei das erste Gelenkstabsystem bezüglich der von den Parallelogrammstrukturen beschriebenen Ebene spiegelbildlich zur zweiten Parallelogrammstruktur ausgebildet und angeordnet ist

17. Deckenlift gemäß Anspruch 16, wobei die Projektorbefestigungseinrichtung (88) zwischen den beiden Gelenkstabsystemen (10) vorgesehen ist, so dass der Projektor (87) zwischen den beiden Gelenkstabsystemen (10) platziert montierbar ist und die beiden Gelenkstabsysteme (10) seitlich von dem Projektor (87) angeordnet sind.

18. Deckenlift gemäß Anspruch 17, wobei der Deckenlift (86) eine Energiekette (92) aufweist, die zur Führung von einem für die Energieversorgung des Projektors (87) und/oder zum Datentransfer vom/zum Projektor (87) bereitstellbaren Kabel (97) vorgesehen ist, wobei das eine Ende der Energiekette (92) relativ zum ersten Endgelenkelement (28) festgelegt ist und das andere Ende der Energiekette (92) relativ zum zweiten Endgelenkelement (30) festgelegt ist.

19. Deckenlift gemäß Anspruch 16, wobei die Projektorbefestigungseinrichtung (88) in Verlängerung zu den beiden Gelenkstabsystemen (10) vorgesehen ist, so dass der Projektor (87) in Verlängerung zu den beiden Gelenkstabsystemen (87) platziert montierbar ist und die beiden Gelenkstabsysteme (10) an der Oberseite an dem Projektor (87) angeordnet sind.

20. Deckenlift gemäß Anspruch 19, wobei an den Gelenkelementen (24, 26) Achsen (96) vorgesehen und befestigt sind, die jeweils zwei sich entsprechende Gelenkelemente (24, 26) starr miteinander verbinden.

21. Deckenlift gemäß Anspruch 20, wobei an den Achsen (96) Kabelführungsbögen (98) vorgesehen und befestigt sind, die zur Führung von einem für die Energieversorgung des Projektors(87) und/oder zum Datentransfer vom/zum Projektor (87) bereitstellbaren Kabel (97) vorgesehen ist.
